# EUROPEAN PATENT SPECIFICATION

(11) **EP 1 568 724 B1**
(45) Date of publication and mention of the grant of the patent: **13.09.2006**
(21) Application number: 05004007.0
(22) Date of filing: 24.02.2005
(51) Int. Cl.: C08G 59/40, C08L 63/02, C23C 22/00

(54) **Process for the production of electrical steel sheet cores**
Verfahren zur Herstellung eines Kernes aus elektrisch leitfähigem Stahlblech
Procédé de production de noyaux en tôle en acier électrique

(30) Priority: 27.02.2004 US 788985
(43) Date of publication of application: 31.08.2005
(73) Proprietor: E.I. DU PONT DE NEMOURS & COMPANY INCORPORATED, Wilmington, Delaware 19898 (US)
(72) Inventor: Wimmer, Michael, 2340 Moedling (AT); Dopler, Anita, 2851 Krumbach (AT)
(74) Representative: Blum, Joachim

(56) References cited:
- US-A- 5 500 461
- PATENT ABSTRACTS OF JAPAN vol. 1999, no. 12, 29 October 1999 (1999-10-29) -& JP 11 193475 A (NKK CORP), 21 July 1999 (1999-07-21)

## Description

### BACKGROUND OF THE INVENTION

The invention relates to a process for the production of electrical steel sheet cores for use in electrical equipment involving the use of an adhesion coat for the electrical steel sheet.

Production of the magnetisable cores of electrical equipment, such as transformers, generators and motors, involves stacking individual metal sheets to form a solid core. Before this stacking process, the mutually electrically insulated electrical steel sheets are stamped out as segments from a continuous electrical steel strip. The metal sheets are clipped, riveted, screwed or welded together. So that ideal magnetic properties are still obtained after the above-stated thermal and mechanical stresses, these sheet metal stacks are subsequently annealed. The steel sheets are electrically insulated by using coating materials which may consist of inorganic and organic film formers. According to AT-409378, said materials may, for example, contain organo-metallic titanium and silicon compounds together with the film formers in order to improve annealing resistance and increase insulation resistance.

Stoving enamels (enamels or coating compositions that require baking at an elevated temperature) are also used as an alternative technology to bond the individual electrical steel sheets together as well as to provide electrical insulation. The coated sheets may be stoved (baked) by hot pressing.

Normally, stoving enamels with a relatively high solvent content are used. However, environmental and safety concems dictate that new products, in particular stoving enamels, be developed that have a minimum content of high-volatile solvents. Such new products should have an aqueous base. A number of components are necessary to obtain the properties that are demanded of such products, like having acceptable application properties at high enamelling speed, good adhesion, good chemical stability, good mechanical properties, high surface insulation resistance, at the lowest possible solvent content.

US 5,500,461 and US 5,500,462 relate to stable aqueous epoxy resin dispersions which contain micronized dicyandiamide as the curing agent and a reactive surface-active agent. The dispersions are suitable for coating the most varied kinds of substrates. These compositions generally are not useful for electrical steel sheets which demand a high level of specific properties, such as high corrosion resistance and high resoftening temperatures, as are required for use in electrical motors and transformers.

JP 11-193 475 and JP 11-193476 describe a method for the production of electrical sheets for the production of sheet metal stacks using aqueous epoxy resin systems containing a specific phenolic resin of Resoltype as crosslinking agent as well as dicyandimide as an additional component. The crosslinking is carried out by polycondensation of the epoxide with the phenolic resin. The coatings are intended to provide elevated adhesion and corrosion resistance on exposure to elevated temperatures.

### SUMMARY OF THE INVENTION

This invention provides a process for the production of electrical steel sheet cores which makes the production of the cores straightforward by the use of an aqueous self-bonding coat with a reduced content of additional components while ensuring excellent bonding strength, corrosion resistance, electrical insulation and high resoftening temperatures of the coating.

The process for the production of electrical steel sheet cores is characterized by a process comprising the following steps:
a) applying of at least one coating layer of an aqueous composition onto the surface of the steel sheet, the composition containing
   A) 100 parts per weight of one or more epoxy resins based on bisphenol-A-type and/or bisphenol-F-type, 100% of solids,
   B) 1 to 25 parts per weight of dicyandiamide,
   C) 0.1 to 10 parts per weight of additives,
   D) 0.1 to 120 parts per weight of flow agent and
   E) 50 to 200 parts per weight of water,
b) drying the applied layer under increased temperature and
c) assembling of the coated electrical steel sheets to form a sheet core and bonding the sheets with each other by thermal curing of the coating.

The process according to the invention makes it possible to produce electrical steel sheet cores which, when used in electrical equipment such as motors and transformers, allow a long service life of said equipment by providing excellent self-bonding of the coating and electrical insulation even on exposure to voltage fluctuations. The requirements for good corrosion resistance are also fulfilled. High resoftening temperatures and an increased ability for punching the coated steel sheets are an essential advantage of the coating. By using the composition according to the invention, only a small amount of the aqueous composition is lost when the coated sheets are pressed together and bond together under the pressure load.

### DETAILED DESCRIPTION OF THE INVENTION

As component A) one or more epoxy resins based on bisphenol A type and/or bisphenol-F-type are used, preferably as an aqueous dispersion. The epoxy resin is used in a quantity of 40 to 70 wt.% in the aqueous dispersion. The composition A) to E) is related to 100 parts per weight of solids of the epoxy resin.

The number average molar mass of the epoxy resin is from about 700 to 5000, the epoxy equivalent weight from about 400 to 6000.

The production of these resins is known from the specialist literature. Bisphenol-A is obtained by an acid-catalyzed condensation of acetone with phenol. The reaction takes place via a chlorohydrin intermediate chemical product, e.g., epichlorohydrin, resulting in bisphenol-A-diglycidylether (DGEBA). The still existing DGEBA can further react, when mixed with Bisphenol-A, to higher-molecular linear polyethers. The higher-molecular epoxide resins can also be synthetized by means of further processes known by the experts ("taffy" or "one-step" processes).

Other binders than the mentioned epoxy resins are additionally useful in the composition of the process according to the invention, such as ―phenol novolac type epoxy resins, acryl resins, polyamide resins, polyimide resins, polyurethane resins, silicon resins, polyesters, polyolefins, fluoride resins. These are preferably used as aqueous composition in quantities of below 20 wt.%, relative to the composition A) to D).

Dicyandiamide is used as the component B) as curing agent component in a quantity of 1 to 25 parts per weight, preferably of 2 to 15 parts per weight.

Micronized dicyandiamide is preferably used. Micronized means that the dicyandiamide has been appropriately processed such that it has an average particle size of between 0.1 and 50 µm, preferably of between 1 and 20 µm. The particle size of the dicyandiamide is particularly preferably no greater than 8 µm, especially no greater than 6 µm.

Micronization of dicyandiamide is normally done with a compressed-air mill where the particles are shot by air towards each other and by this process comminute themselves. A classifier facilitates the desired size classification of the particles according to the specification.

The addition of additives as component C), such as for example levelling agents, catalysts, pigments and slip additives in a quantity of 0.1 to 10 parts per weight makes it possible to optimise the coating system with regard to the quality of the coating, such as, for example, increasing stoving speed and imparting colour.

As component D) flow agents are used in a quantity of 0.1 to 120 parts per weight, preferably of 2 to 70 parts per weight. Organic solvents and polyglycol are usable as flow agents. Preferably, polyglycol is used.

By adding one or more monomeric organo-metallic compounds, such as ortho-titanic or -zirconic acid esters, it is furthermore possible to optimise the range of properties of the coating composition.

Fillers in a quantity of below 30 wt.%, relative to the composition A) to D) are additionally usable.

The composition according to the invention may be produced by simply mixing the individual components together. For example, it is possible to produce an epoxy dispersion by mixing the epoxy resin with water. The dicyandiamide and the further components are then added, for example with stirring, to produce a stable dispersion, optionally with input of heat and dispersing agents.

Water is added in a quantity such that a solids content of 30 to 60% is obtained for the finished composition.

Application of the composition by the process according to the invention proceeds in known manner, e.g., by spraying or dip coating onto one or both sides of the electrical steel sheet surface as one or more layers to layer thicknesses of 1 to 20 µm, preferably 2 to 12 µm, particularly preferred 3 to 8 µm per layer.

The surface of the electrical steel sheet may here be coated or uncoated, pretreated or unpretreated. The sheets may be pretreated, for example by washing, in order to remove soiling, grease deposits. Preferred untreated and uncoated electrical steel sheets are used, coated by the process according to the invention, preferably by a one-layer-coating.

Drying of the coating is effected as physical drying process at temperatures causing a PMT (peak metal temperature) in the range of 230 to 260°C. The dry film forms a so-called protective layer thereby maintaining the active state of the coating. This means that the curing of the coating, i.e., the chemical crosslinking has not taken place. In this condition, the coated steel sheet is stable in storage.

After the drying process, parts can be stamped out of the coated steel sheet and can then be stacked. By the supply of heat and pressure, the coating of the individual sheets bonds together and cures, preferably at temperatures from 100 to 300°C and at a pressure of 1.0 to 6.0 N/mm² during a fixed time period. The necessary heat can be supplied for example in an oven, by means of induced heat, IR-radiation or hot air.

Bonding of the coated electrical steel sheets can be effected in different manners. It is possible to bond sheets having a dry coating (active state) together with uncoated sheets. Furthermore, only sheets with a dried coating can be bonded together, and furthermore, sheets with a dry coating can be used together with sheets having a cured coating (passive state).

After the process according to the invention has been finished, the coating shows a passive state that means the chemical crosslinking reaction is completed.

The process according to the invention makes it possible to ensure a long service life of electrical equipment, such as motors and transformers, by providing excellent self-bonding of the coating and outstanding resistance to voltage fluctuations as well as high resoftening temperatures.

### EXAMPLES

### Example 1

### Manufacture of coatings according to the invention

As binding agent, an aqueous dispersion is used consisting of epoxide resin with a solid content of 51 to 55% and 7% of 1-methoxy-2-propanol and <3% benzyl alcohol. As curing agent, a micronized dicyandiamide is used. Add 2 parts per weight of the lubricant BYK-341 and 12 parts per weight of diethylene glycol monobutylether. The mixture is stirred until it becomes homogeneous.

The compound is applied to the electrical steel sheet by spraying and dried until the active state thereby reaching a PMT (peak metal temperature) of 250°C. Subsequently, the sheets are cut to a certain size and bonded together as stacks for 90 min. at a pressure of 3 N/mm² and a PMT of 200°C. The bonding strength is measured according to DIN EN 1464.

The resoftening temperature (RT) is the temperature where a tensile strength (DIN 53283) of at least 25% of the tensile strength at room temperature is given.

The salt spray test is measured according to DIN EN ISO 7253. The evaluation of the test sheets is effected according to ISO 4628.

**Table 1**

| No | Epoxy resin (100 % solids) [parts per weight] | Dicyandiamide [parts per weight] | Layer thickness [µm] | Bonding/Curing condltions | | Bonding Strength DIN EN 1464 [N/mm] | RT [°C] | Salt spray test DIN ISO 7253 ISO 4628 |
|---|---|---|---|---|---|---|---|---|
| | | | | Temperature [°C] | Time period [min] | | | |
| 1 | 100 | 1 | 4 | 200 | 90 | 6 | 140 | m=0, g=0; Ri=0; W_{d}=1 mm |
| 2 | 100 | 3 | 4 | 200 | 90 | 8 | 145 | m=0, g=0; Ri=0; W_{d}=0 mm |
| 3 | 100 | 4 | 4 | 200 | 90 | > 9 | 150 | m=0, g=0; Ri=0; W_{d}=0 mm |
| 4 | 100 | 5 | 4 | 200 | 90 | > 9 | 150 | m=0, g=0; Ri=0; W_{d}=0 mm |
| 5 | 100 | 6 | 4 | 200 | 90 | > 9 | 150 | m=0, g=0; Ri=0; W_{d}=0 mm |
| 6 | 100 | 7 | 4 | 200 | 90 | 8 | 155 | m=0, g=0; Ri=0; W_{d}=0 mm |
| 7 | 100 | 25 | 4 | 200 | 90 | 6 | 140 | m=0, g=0; Ri=0; W_{d}=0 mm |

### Example 2

### Coating on electrical steel sheet in accordance with the prior art

**Table 2**

| Composition | Layer thickness [µm] | Tensile strength [N/mm²] | Salt spray test |
|---|---|---|---|
| JP-H11-193475 No. (7) | 5 | > 16 | Ri = 0 - 1 |
| No. 3 | 4 | >19 | m=0, g=0; Ri = 0; W_{d} = 0 mm |

Composition No. (7) according to JP H11-193475 comprises: 100 parts per weight (solids) of a water dispersible Bisphenol-A-type epoxy resin and 15 parts per weight (solids) of a phenolic resin based on a reaction product of 1 mol Bisphenol A and 7 mol formaldehyde, the content of methylolated components higher than dimethylolated components is 98.3 wt%, were mixed together with water and stirred to obtain the coating composition with a solids content of the composition of 20 wt.%.

The tensile strength and the salt spray test (Table 2) show better results for the composition No. 3 according to the invention than for the composition according to JP-H11-193475.

## Claims

1. A process for the production of electrical steel sheet cores for use in electrical equipment comprising the following steps
a) applying of at least one coating layer of an aqueous composition onto the surface of the electrical steel sheet, the composition comprising
A) 100 parts per weight of one or more epoxy resins based on bisphenol-A-type and/or bisphenol-F-type, 100% of solids,
B) 1 to 25 parts per weight of dicyandiamide,
C) 0.1 to 10 parts per weight of additives,
D) 0.1 to 120 parts per weight of flow agent and
E) 50 to 200 parts per weight of water,
b) drying the applied layer under increased temperature and
c) assembling of the coated electrical steel sheets to form a sheet core and bonding the sheets with each other by thermal curing of the coating.

2. The process according to claim 1 wherein the composition is produced by production of an epoxy dispersion by mixing the epoxy resin with water and then adding the dicyandiamide and the further components of the composition.

3. The process according to claim 2 wherein the epoxy resin is used in a quantity of 40 to 70 wt.% in the aqueous dispersion.

4. The process according to claim 1 wherein water is added in a quantity such that a solids content of 30 to 60% is obtained for the finished composition.

5. The process according to daim 1 wherein the number average molar mass of the epoxy resin is from about 700 to 5000, the epoxy equivalent weight from about 400 to 6000.

6. The process according to claim 1 wherein micronized dicyandiamide is used with an average particle size of no greater than 6 µm.

7. The process according to claim 1 wherein polyglycol is used as a flow agent in a quantity of 2 to 70 parts per weight.

8. The process according to claim 1 wherein one or more monomeric organo-metallic compounds selected from the group consisting of ortho-titanic and -zirconic acid esters are additionally used in the composition.

9. The process according to claim 1 wherein the composition is applied onto the unpretreated and uncoated electrical steel sheet as one-layer-coating with a layer thickness of 3 to 8 µm.

10. The process according to claim 1 wherein the drying of the coating is effected at temperatures causing a PMT in the range of 230 to 260°C.

11. The process according to claim 1 wherein the bonding and curing of the coating is effected at temperatures from 100 to 300°C and at a pressure of 1.0 to 6.0 N/mm² during a fixed time period.

12. An electrical steel sheets core for use in electrical equipment produced by the process according to claim 1.

13. An electrical equipment containing at least one electrical steel sheets core produced by the process according to claim 1.

## Patentansprüche

1. Verfahren zur Herstellung von elektrischen Stahlblechkernen für den Einsatz in elektrischen Ausrüstungen, welches die nachfolgenden Schritte umfasst:
a) ein Auftragen von mindestens einer Beschichtungslage einer wässerigen Zusammensetzung auf die Oberfläche des elektrischen Stahlblechs, wobei die Zusammensetzung enthält:
A) 100 Gewichtsteile von einem oder von mehreren Epoxyharzen auf der Basis des Bisphenol A Typus und / oder des Bisphenol F Typus, 100 % an Feststoffen,
B) 1 bis 25 Gewichtsteile Dicyandiamid,
C) 0,1 bis 10 Gewichtsteile Zusatzmittel,
D) 0,1 bis 120 Gewichtsteile Flussmittel, und
E) 50 bis 200 Gewichtsteile Wasser,
b) ein Trocknen der aufgetragenen Lage unter einer erhöhten Temperatur, und
c) ein Zusammensetzen der beschichteten elektrischen Stahlbleche zum Erzeugen eines Stahlkems und ein Verbinden der Bleche, das eine mit dem anderen, durch ein thermisches Härten der Beschichtung.

2. Verfahren gemäß Anspruch 1, bei welchem die Zusammensetzung hergestellt wird durch Zubereitung einer Epoxydispersion über ein Vermischen des Epoxyharzes mit Wasser gefolgt von der Zugabe des Dicyandiamides und der weiteren Komponenten der Zusammensetzung.

3. Verfahren gemäß Anspruch 2, bei welchem das Epoxyharz in einer Menge von 40 bis 70 Gewichtsprozent in der wässerigen Dispersion benutzt wird.

4. Verfahren gemäß Anspruch 1, bei welchem das Wasser in einer solchen Menge hinzugefügt wird, dass ein Feststoffgehalt von 30 bis zu 60 % für die fertige Zusammensetzung erzielt wird.

5. Verfahren gemäß Anspruch 1, bei welchem die zahlenmäßig gemittelte Molekularmasse des Epoxyharzes zwischen etwa 700 bis zu 5000 liegt und das Epoxy-Äquivalentgewicht von etwa 400 bis zu 6000 beträgt.

6. Verfahren gemäß Anspruch 1, bei welchem das micronisierte Dicyandiamid mit einer durchschnittlichen Partikelgröße von nicht mehr als 6 µm zum Einsatz kommt.

7. Verfahren gemäß Anspruch 1, bei welchem Polyglycol als ein Flussmittel in einer Menge von 2 bis zu 70 Gewichtsprozent benutzt wird.

8. Verfahren gemäß Anspruch 1, bei welchem eine oder mehrere monomere organometallische Zusammensetzungen, welche ausgewählt werden aus der aus Estern der ortho-Titansäure und der ortho-Zirkonsäure bestehenden Gruppe, zusätzlich in der Zusammensetzung benutzt werden.

9. Verfahren gemäß Anspruch 1, bei welchem die Zusammensetzung auf das nicht vorbehandelte und nicht beschichtete elektrische Stahlblech als eine einlagige Beschichtung mit einer Lagendicke von 3 bis zu 8 µm aufgetragen wird.

10. Verfahren gemäß Anspruch 1, bei welchem das Trocknen der Beschichtung bei Temperaturen in dem Bereich von 230 bis 260°C, die ein PMT verursachen, durchgeführt wird.

11. Verfahren gemäß Anspruch 1, bei welchem das Verbinden und das Härten der Beschichtung während einer vorgegebenen Zeitdauer bei Temperaturen zwischen 100 und 300°C und unter einem Druck von 1,0 und 6,0 N/mm² durchgeführt werden.

12. Elektrische Stahlblechkerne für den Einsatz in elektrischen Ausrüstungen, welche entsprechend dem Verfahren gemäß Anspruch 1 hergestellt werden.

13. Elektrische Ausrüstung, welche mindestens einen elektrischen Stahlblechkern enthält, welcher nach dem Verfahren gemäß Anspruch 1 hergestellt worden ist.

## Revendications

1. Procédé pour la production de noyaux en feuilles d'acier électrique pour une utilisation dans un équipement électrique comprenant les étapes suivantes:
a) l'application d'au moins une couche de revêtement d'une composition aqueuse sur la surface de la feuille d'acier électrique, la composition comprenant:
A) 100 parties en poids d'une ou de plusieurs résines époxy basées sur un type de bisphénol A et/ou un type de bisphénol F, 100% de solides,
B) de 1 à 25 parties en poids de dicyandiamide,
C) de 0,1 à 10 parties en poids d'additifs,
D) de 0,1 à 120 parties en poids d'un agent d'écoulement, et
E) de 50 à 200 parties en poids d'eau,
b) le séchage de la couche appliquée sous une température accrue, et
c) l'assemblage des feuilles d'acier électrique revêtues pour former un noyau de feuilles et le collage des feuilles les unes avec les autres par un durcissement thermique du revêtement.

2. Procédé suivant la revendication 1, dans lequel la composition est produite par la production d'une dispersion d'époxy en mélangeant la résine époxy avec de l'eau et ensuite en ajoutant le dicyandiamide et les composants supplémentaires de la composition.

3. Procédé suivant la revendication 2, dans lequel la résine époxy est utilisée dans une quantité de 40 à 70% en poids dans la dispersion aqueuse.

4. Procédé suivant la revendication 1, dans lequel l'eau est ajoutée dans une quantité telle qu'une teneur en solides de 30 à 60% est obtenue pour la composition finie.

5. Procédé suivant la revendication 1, dans lequel la masse molaire moyenne en nombre de la résine époxy est d'environ 700 à 5000, le poids équivalent d'époxy d'environ 400 à 6000.

6. Procédé suivant la revendication 1, dans lequel un dicyandiamide micronisé est utilisé avec une taille de particules moyenne ne dépassant pas 6 µm.

7. Procédé suivant la revendication 1, dans lequel un polyglycol est utilisé comme agent d'écoulement dans une quantité de 2 à 70 parties en poids.

8. Procédé suivant la revendication 1, dans lequel un ou plusieurs composés organométalliques monomères choisis dans le groupe constitué d'esters d'acides ortho-titanique et -zirconique sont en outre employés dans la composition.

9. Procédé suivant la revendication 1, dans lequel la composition est appliquée sur la feuille d'acier électrique non pré-traitée et non revêtue sous forme d'un revêtement à une couche avec une épaisseur de couche de 3 à 8 µm.

10. Procédé suivant la revendication 1, dans lequel le séchage du revêtement est effectué à des températures entraînant un PMT dans l'intervalle de 230 à 260°C.

11. Procédé suivant la revendication 1, dans lequel le collage et le durcissement du revêtement sont effectués à des températures de 100 à 300°C et à une pression de 1,0 à 6,0 N/mm² durant une période de temps fixée.

12. Noyau de feuilles d'acier électrique pour une utilisation dans un équipement électrique produit par le procédé suivant la revendication 1.

13. Equipement électrique contenant au moins un noyau de feuilles d'acier électrique produit par le procédé suivant l'invention.
